# EUROPEAN PATENT APPLICATION

(11) **EP 3 431 842 A1**
(43) Date of publication of application: **23.01.2019**
(21) Application number: 17461573.2
(22) Date of filing: 21.07.2017
(51) Int. Cl.: F16K 11/052, B60H 1/00, F16K 15/03, F24F 13/10

(54) **PLATE SHUTTLE VALVE**

(71) Applicant: HS Wroclaw Sp. z o.o., 51-317 Wroclaw (PL)
(72) Inventor: RESZEWICZ, Modest, 50-238 Wroc aw (PL); CZARNECKI, Pawe, 58-100 widnica (PL)
(74) Representative: Dehns

(57) **Abstract**

A shuttle valve assembly (10) comprises an outlet duct (12), a first inlet duct (14) fluidly connected to the outlet duct (12) at a first inlet (18), and a second inlet duct (16) fluidly connected to the outlet duct (12) at a second inlet (20). The first inlet (18) is separated from the second inlet (20) by a mounting section (30). The shuttle valve assembly (10) further comprises a hinge pin (32) attached to the mounting section (30) and defining a pin axis (A). The shuttle valve assembly (10) further comprises a flapper (28) pivotally attached to the hinge pin (32) at a connecting end (34) of the flapper (28) and extending into the outlet duct (12), the flapper (28) having a first side (40) and a second side (42), wherein the first side (40) is configured to sealingly engage with the first inlet (18) when the flapper (28) is in a first position, wherein the second side (42) is configured to sealingly engage with the second inlet (20) when the flapper (28) is in a second position. The flapper (28) has a width in the pin axis direction that is greatest at the connecting end (34).

## Description

### TECHNICAL FIELD

The present disclosure relates to check valves and shuttle valves.

### BACKGROUND

It is known to use check valves to allow fluid flow in one direction, and to prevent flow in the opposite direction. Check valves are used in a wide variety of applications, for example in air conditioning systems, more particularly in aircraft air conditioning systems.

Many types of check valves are known. Some check valves include hinged flappers that open in the direction of fluid flow. In such valves, when a fluid pressure exceeds a predetermined valve "cracking pressure", the flappers of the valve open to allow flow through the valve. Likewise, if significant pressure drops in the upstream fluid are experienced (such that there is a negative pressure differential across the valve), the flapper elements close, preventing flow reversal.

In some applications, there may be a need to control a direction of fluid flow at a three-way junction. This can require the use of multiple check valves.

Shuttle valves control fluid flow from two inputs into a single output. Shuttle valves comprise a member which is moveable by pressure in the valve, and thereby blocks flow from the lower-pressure input of the two inputs. This prevents unwanted backflow.

Valve structures must withstand frequent cycles of opening and closing. It is therefore desirable that valve structures are arranged to minimise forces within the component parts, in order to provide a durable valve.

### SUMMARY

According to one embodiment of the present disclosure, there is provided a shuttle valve assembly. The shuttle valve assembly comprises an outlet duct, a first inlet duct fluidly connected to the outlet duct at a first inlet, and a second inlet duct fluidly connected to the outlet duct at a second inlet. The first inlet is separated from the second inlet by a mounting section. The shuttle valve assembly further comprises a hinge pin attached to the mounting section, defining a pin axis. The shuttle valve assembly further comprises a flapper pivotally attached to the hinge pin at a connecting end of the flapper and extending into the outlet duct, the flapper having a first side and a second side. The first side is configured to sealingly engage with the first inlet when the flapper is in a first position and the second side is configured to sealingly engage with the second inlet when the flapper is in a second position. The flapper has a width in the pin axis direction that is greatest at the connecting end.

The outlet duct and the first and second inlet ducts may each have a generally rectangular cross-section.

The flapper has may have a length in a direction perpendicular to the pin axis, wherein the flapper forms a rectangular section having a substantially constant width along its length.

The outlet duct may have a circular cross-section, and wherein the first and second inlets each have a generally semi-circular shape or generally D-shape.

The first and second inlet ducts may meet at an intersection, wherein the mounting section is arranged at the intersection.

The first and second inlet ducts may comprise respective transition sections, each transition section having a first end and a second end, wherein the first end of each transition section has a circular cross-section, wherein the second end of each transition section has a semi-circular cross-section, and wherein the first and second inlet are formed at the respective second ends.

The first and second inlet ducts may meet at an intersection, and be separated by a separating wall, wherein the mounting section is displaced from the intersection and forms one end of the separating wall.

The separating wall may extend in a direction perpendicular to the pin axis, the separating wall having a greatest length in said direction, wherein said greatest length is greater than a radius of either of the first or second inlet ducts.

The outlet duct and the first and second inlet ducts may be formed from metallic materials.

According to another embodiment of the present disclosure, there is an air management system for an aircraft comprising the shuttle valve assembly of any of the previous embodiments.

### BRIEF DESCRIPTION OF THE DISCLOSURE

Some exemplary embodiments and features of the present disclosure will now be described by way of example only, and with reference to the following drawings in which:
Fig. 1A shows a cross-sectional view of an embodiment of a valve in accordance with this disclosure;
Fig. 1B shows a partial view of the valve of Fig. 1A along the line B-B.
Fig. 1C shows a view of the valve of Fig. 1A from above.
Fig. 1D shows a view of the valve of Fig. 1A from below.
Fig. 2A shows a cross-sectional view of another embodiment of a valve in accordance with this disclosure;
Fig. 2B shows a partial view of the valve of Fig. 2A along the line B-B.
Fig. 2C shows a view of the valve of Fig. 2A from above.
Fig. 2D shows a view of the valve of Fig. 2A from below.
Fig. 3A shows a cross-sectional view of another embodiment of a valve in accordance with this disclosure;
Fig. 3B shows a partial view of the valve of Fig. 3A along the line B-B.
Fig. 3C shows a view of the valve of Fig. 3A from above.
Fig. 3D shows a view of the valve of Fig. 3A along the line D-D.

### DETAILED DESCRIPTION

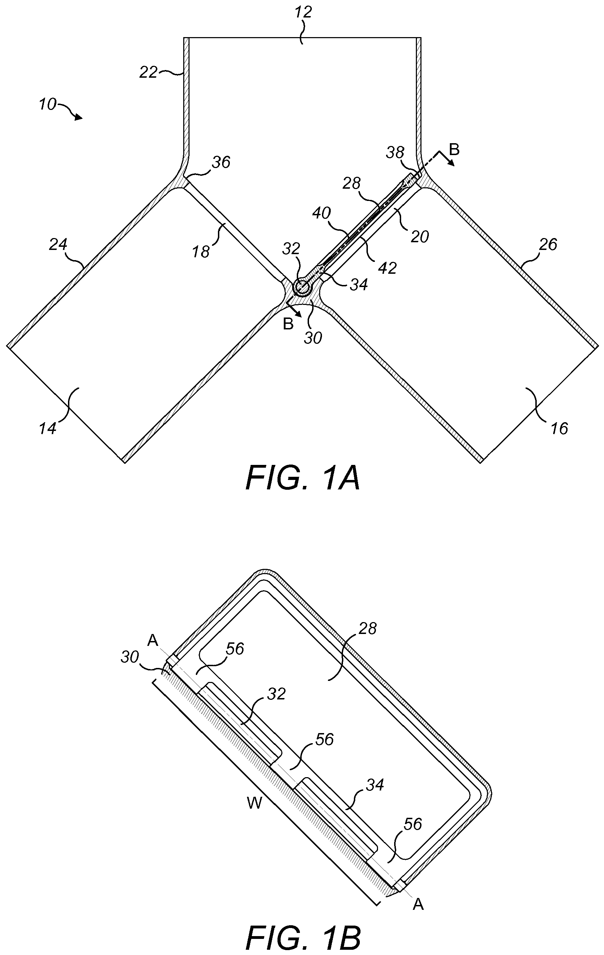

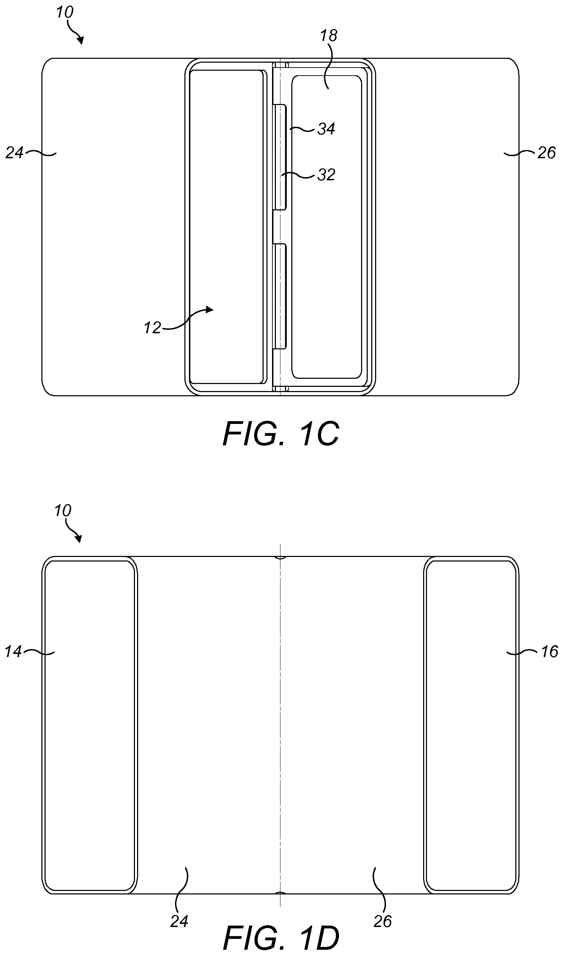

With reference to Figs. 1A-1D, a shuttle valve assembly 10 is illustrated. The shuttle valve comprises an outlet duct 12, a first inlet duct 14, and a second inlet duct 16. The first inlet duct 14 and the second inlet duct 16 are both fluidly connected to the outlet duct 12, and form respective first and second inlets 18, 20 at the connection. The outlet duct 12, first inlet duct 14, and second inlet duct 16 comprise, and are partially defined by, outlet duct wall 22, first inlet duct wall 24 and second inlet duct wall 26 respectively.

The two inlet ducts 14, 16 provide fluid flow from different sources to the common outlet duct 12. Generally, one inlet duct will provide a higher pressure fluid flow than the other inlet duct. In some cases, this can result in fluid flowing from one inlet duct into the other, rather than into the outlet duct 12. This 'backflow' is undesirable. As such flow from the higher-pressure of the two inlet ducts must be prevented from entering the lower-pressure inlet duct.

In order to prevent backflow without the use of multiple check valves, a single flapper element can be used to intermittently seal either one of the two inlet ducts 14, 16.

With further reference to Fig 1A, the shuttle valve assembly 10 comprises a flapper element 28 as shown in Fig 1B. The flapper element 28 is mounted at a mounting section 30, which is formed at an intersection where the first inlet duct wall 24 meets the second inlet duct wall 26. The flapper element 28 extends from the mounting section 30 into the outlet duct 12.

In order to attach the flapper element 28 to the mounting section 30, a hinge pin 32 is provided, the hinge pin 32 defining a pin axis A. The hinge pin 32 is attached to the mounting section 30. The flapper element 28 is, in turn, rotatably mounted to the hinge pin 32 at a connecting end 34 of the flapper element 28 by lugs 56. The flapper element 28 is thereby mounted to the rest of the assembly, such that it can hinge about the pin axis A.

As previously discussed, the first and second inlet ducts 14, 16 are fluidly connected to the outlet duct 12 at first and second inlets 18, 20. The first and second inlets 18, 20 may comprise respective lips 36, 38.

The flapper element 28 has a first inlet side 40 and an opposing second inlet side 42. The flapper element 28 moves between a first position and a second position. In the first position, the first inlet side 40 rests against and sealingly engages the first lip 36, thereby sealing the first inlet 18. Subsequently, fluid flow passes from the second inlet duct 16 to the outlet duct 12. In the second position, the second inlet side 42 rests against and sealingly engages the second lip 38, thereby sealing the second inlet 20. In this position, fluid flow passes from the first inlet duct 14 to the outlet duct 12.

The flapper element 28 moves from the first to the second position, or *vice-versa*, depending on the relative fluid pressure in the first and second inlet ducts 14, 16. A difference in pressure creates a pressure differential force, urging the flapper element 28 into contact with the first or second bumpers 36, 38 of the first and second inlets 18, 20.

Moving between the first and second positions creates stresses in the flapper element 28 from the impact between the flapper element and the lips 36, 38. Cycling stresses, from repeated operation of the valve, cause wear on the components. This limits the operating life of the valve. It is therefore necessary to minimise the forces within the flapper element, thereby maximising the operating life of the valve.

In order to reduce the force of the impacts and the stresses created thereby, the moment of inertia of the flapper element 28 is minimised. The flapper element has a width, measured in the direction of the pin axis A. In order to minimise the moment of inertia of the flapper element, the shuttle valve assembly 10 is constructed such that a maximum width W of the flapper element 28 occurs at the connecting end 34. That is, the flapper element 28 decreases in width from the connecting end 34 as it extends into the outlet duct 12, or maintains a constant width from the connecting end 34. This minimises the area of the flapper element 28 which is disposed away from the connection with the hinge pin 32.

In the particular embodiment of Figs. 1A-1D, the outlet duct 12, first inlet duct 14, and second inlet duct 16 have a substantially rectangular cross-sectional shape. The flapper element 28 forms a substantially rectangular section. The width of the flapper element 28 in the pin axis direction A is therefore constant along the length of the flapper element 28, and is the same as the maximum width W which occurs at the connecting end 34.

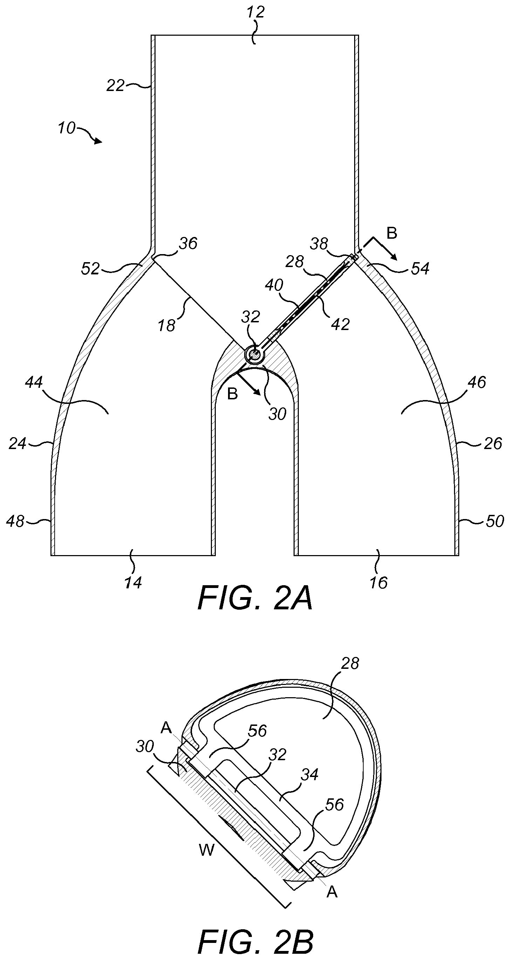

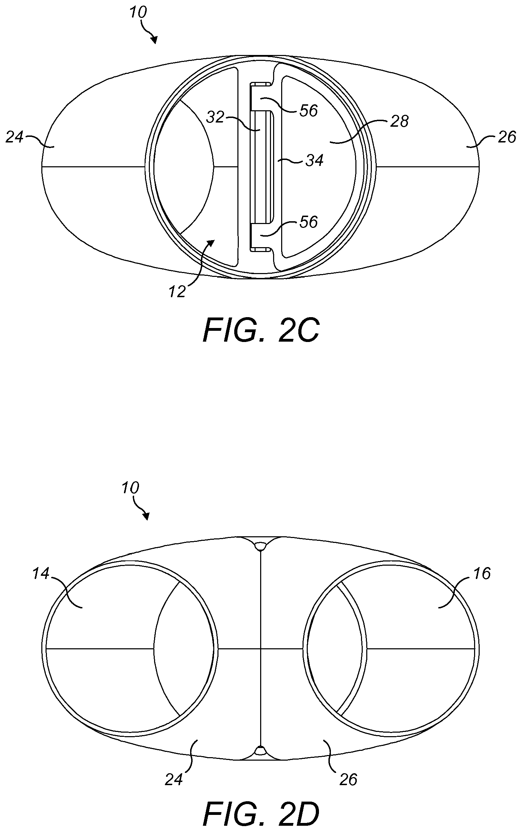

Figs. 2A-2D show another embodiment of shuttle valve assembly 10. The assembly is similar to that shown in Figs. 1A-1D, and described above. In this embodiment, the outlet duct 12, first inlet duct 14, and second inlet duct 16 have a generally circular cross-section.

In this embodiment, the first inlet duct 14 and second inlet duct 16 comprise respective first and second transition sections 44, 46. The transition sections each have a respective first end 48, 50, and a second end 52, 54 downstream of the first end 48, 50. The transition sections 44, 46 join the inlets 18, 20 at the second end 52, 54. The cross-section at the first ends 48, 50 is generally circular, while the cross section at the second ends 52, 54, and the cross-section of the inlets 18, 20, is generally semi-circular in shape. The cross-section of the transition sections 44, 46 gradually changes between the two shapes along their length.

With continued reference to Fig. 2A, Fig. 2B illustrates the flapper element 28 of the present embodiment. The flapper element 28 has a maximum width W at a connecting end 34. lugs 56 extend from the connecting end 34 to receive the hinge pin 32, moveably attaching the flapper element 28 to the hinge pin 32. The width of the flapper element 28 tapers from the connecting end 34 as the element extends into the outlet duct 12, forming a generally semi-circular shape or D-shape. As previously described, the particular shape of flapper element 28 minimises the moment of inertia of the element.

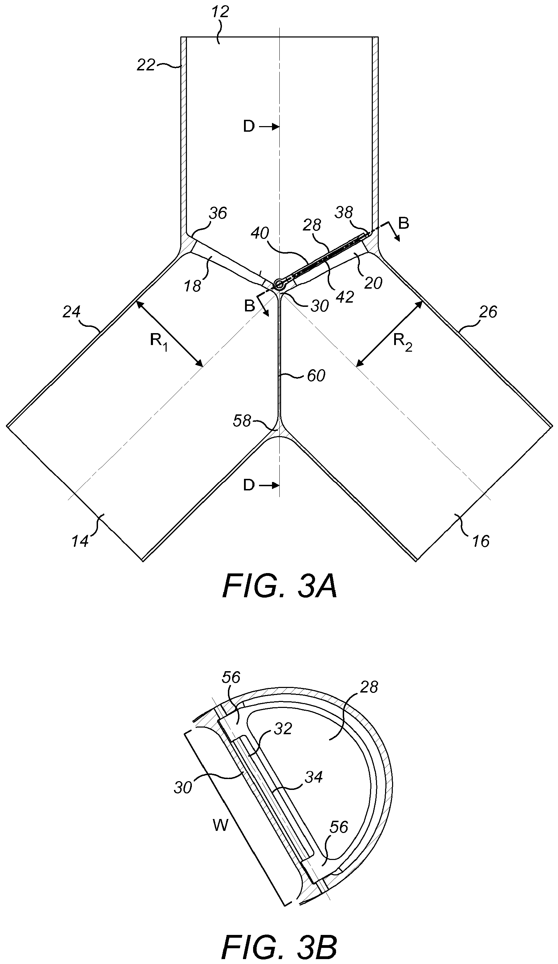

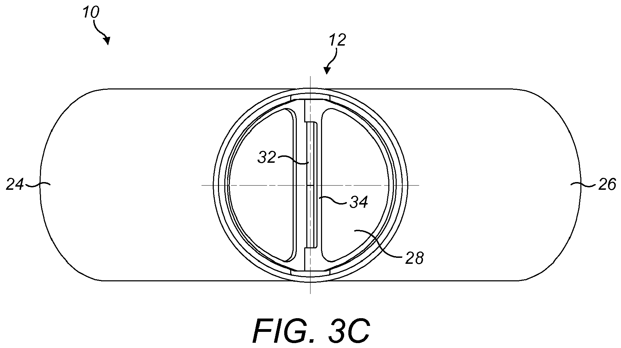

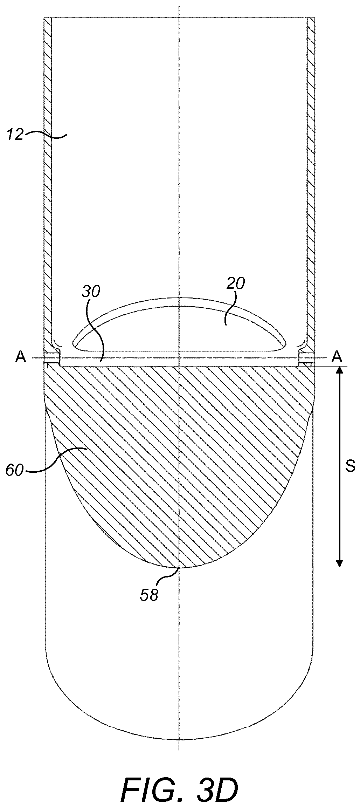

Figs. 3A-3D show another embodiment of shuttle valve assembly 10. The assembly is similar to that shown in Figs. 1A-1D, and described above. In this embodiment, the outlet duct 12, first inlet duct 14, and second inlet duct 16 have a generally circular cross-section.

In this embodiment, the mounting section 30 is separate from the intersection 58 of the first inlet duct walls 24 and second inlet duct walls 26. The mounting section 30 and intersection 58 are joined by a separating wall 60. The separating wall 60 defines a border between first inlet duct 14 and second inlet duct 16.

The separating wall 60 extends between the mounting section 30 and intersection 58, in a direction away from the pin axis A. The separating wall 60 has a greatest length S in the direction away from the pin axis A. The first and second inlet ducts 14, 16 have respective radii R₁, R₂. In an embodiment, the length S of the separating wall 60 is greater than either of the inlet duct radii R₁, R₂.

Positioning the mounting section 30 away from the intersection 58 allows the flapper element 28 to be designed with a shape which minimises moment of inertia, without using transition sections as in the embodiment of Figs. 2A-2D. The flapper element 28 of the present embodiment is illustrated in Fig. 3B. The flapper element has a maximum width W at a connecting end 34. The width of the flapper element 28 decreases in width from the connecting end 34 as the element extends into the outlet duct 12, forming a generally semi-circular shape or D-shape. As previously described, the particular shape of flapper element 28 minimises moment of inertia within the element.

The shuttle valve assembly 10 may form part of an air management system, particularly an air management system in an aircraft. In aerospace applications, it is desirable to reduce mass. The shuttle valve assembly 10 may be formed from metallic materials, in particular lightweight alloys, in order to reduce the weight of the overall construction.

Although the figures and the accompanying description describe particular embodiments and examples, it is to be understood that the scope of this disclosure is not to be limited to such specific embodiments, and is, instead, to be determined by the following claims.

## Claims

1. A shuttle valve assembly (10) comprising:
an outlet duct (12);
a first inlet duct (14) fluidly connected to the outlet duct (12) at a first inlet (18);
a second inlet duct (16) fluidly connected to the outlet duct (12) at a second inlet (20), wherein the first inlet (18) is separated from the second inlet (20) by a mounting section (30);
a hinge pin (32) attached to the mounting section (30) and defining a pin axis (A); and
a flapper (28) pivotally attached to the hinge pin (32) at a connecting end (34) of the flapper (28) and extending into the outlet duct (12), the flapper (28) having a first side (40) and a second side (42), wherein the first side (40) is configured to sealingly engage with the first inlet (18) when the flapper (28) is in a first position, wherein the second side (42) is configured to sealingly engage with the second inlet (20) when the flapper (28) is in a second position, and wherein the flapper (28) has a width in the pin axis direction that is greatest at the connecting end (34).

2. The shuttle valve assembly (10) of claim 1, wherein the outlet duct (12) and the first and second inlet ducts (14, 16) each have a generally rectangular cross-section.

3. The shuttle valve assembly (10) of claim 2, wherein the flapper (28) has a length in a direction perpendicular to the pin axis (A) and wherein the flapper (28) forms a rectangular section having a substantially constant width along its length.

4. The shuttle valve assembly (10) of claim 1, wherein the outlet duct (12) has a circular cross-section, and wherein the first and second inlets (18, 20) each have a generally semi-circular shape or generally D-shape.

5. The shuttle valve assembly (10) of claim 4, wherein the first and second inlet ducts (14, 16) meet at an intersection, and wherein the mounting section (30) is arranged at the intersection.

6. The shuttle valve assembly (10) of claim 5, wherein the first and second inlet ducts (14, 16) comprise respective transition sections (44, 46), each transition section (44, 46) having a first end (48, 50) and a second end (52, 54), wherein the first end (48, 50) of each transition section (44, 46) has a circular cross-section, wherein the second end (52, 54) of each transition section (44, 46) has a semi-circular cross-section, and wherein the first and second inlet (18, 20) are formed at the respective second ends (52, 54).

7. The shuttle valve assembly (10) of claim 4, wherein the first and second inlet ducts (14, 16) meet at an intersection (58) and are separated by a separating wall (60), wherein the mounting section (30) is displaced from the intersection (58) and forms one end of the separating wall (60).

8. The shuttle valve assembly (10) of claim 7, wherein the separating wall (60) extends in a direction perpendicular to the pin axis (A), the separating wall (60) having a greatest length (S) in said direction, wherein said greatest length (S) is greater than a radius (R₁, R₂) of either of the first or second inlet ducts (14, 16).

9. The shuttle valve assembly (10) of any preceding claim, wherein the outlet duct (12) and the first and second inlet ducts (14, 16) are formed from metallic materials.

10. An air management system for an aircraft comprising the shuttle valve assembly (10) of any preceding claim.
